# EUROPÄISCHE PATENTSCHRIFT

(11) **EP 1 188 618 B1**
(45) Veröffentlichungstag und Bekanntmachung des Hinweises auf die Patenterteilung: **16.11.2005**
(21) Anmeldenummer: 01122099.3
(22) Anmeldetag: 14.09.2001
(51) Int. Cl.: B60R 13/10, B62D 33/04, B62D 29/02, F16B 5/00

(54) **Paneelwandplatte für Fahrzeuge**
Panel for a wall of a vehicle
Panneau pour paroi de véhicule

(30) Priorität: 16.09.2000 DE 20016117 U
(43) Veröffentlichungstag der Anmeldung: 20.03.2002
(73) Patentinhaber: AluTeam Fahrzeugtechnik GmbH, 56751 Polch (DE)
(72) Erfinder: Schneider, Horst, 33649 Bielefeld (DE); Schneider, Thomas, 33647 Bielefeld (DE)
(74) Vertreter: Elbertzhagen, Otto

(56) Entgegenhaltungen:
- DE-A- 10 005 737
- GB-A- 1 407 655
- GB-A- 2 143 000

## Beschreibung

Die Erfindung betrifft eine Paneelwandplatte für Fahrzeuge mit einem Kern und auf beiden Seiten angeordneten Aluminium-Kaschierblechen nach dem Oberbegriff von Anspruch 1.

Derartige Paneelwandplatten, wie sie z. B. aus GB-A 2 143 000 bekannt sind, werden aus einzelnen Paneelsegmenten mittels Schraubverbindungen zusammengesetzt, so daß ein Gesamtpaneel entsteht. Aufgrund der Verschraubungen wird insbesondere die Farbbeschichtung der zusammengsetzten Paneele beeinträchtigt, zum anderen muß der bekannte Aufbau spezielle Profileinfassungen zur Abringung der Schraubverbindungen vorsehen. Hierdurch werden die Herstellungskosten der bekannten Paneele erhöht.

Ausgehend von diesem Stand der Technik liegt der Erfindung die Aufgabe zugrunde, eine Paneelwandplatte der als bekannt vorausgesetzten Art so auszubilden, daß sie die erwähnten Nachteile nicht aufweist.

Die Lösung dieser Aufgabe erfolgt mit den Merkmalen des Patentanspruchs 1 dadurch, daß die Plattenabschnitte miteinander verklebt und die Blechabschnitte miteinander verbunden sind. Durch die ineinander greifenden Blechabschnitte wird das gesamte Paneel zusammengehalten, so daß Verschraubungen nicht erforderlich sind und zudem der Farbauftrag auf das fertige Paneel erleichtert wird.

Es hat sich als zweckmäßig erwiesen, daß die Stoßfugen der auf unterschiedlichen Seiten angeordneten Blechabschnitte in Längsrichtung der Paneelwandplatte gegeneinander versetzt sind.

Ebenfalls ist es vorteilhaft, wenn die Stoßfugen der Plattenabschnitte gegenüber den Stoßfugen der Blechabschnitte in Plattenlängsrichtung gegeneinander versetzt sind.

Weitere bevorzugte Ausgestaltungen der Erfindung ergeben sich aus den weiteren Unteransprüchen.

Nachstehend wird eine bevorzugte Ausführungsform der Erfindung anhand der Zeichnung im einzelnen beschrieben. Es zeigen:
- Figur 1 -: einen senkrecht zur Oberfläche in deren Längsrichtung verlaufenden Schnitt durch eine nur teilweise dargestellte Paneelwandplatte,
- Figur 2 -: die Ausbildung eines aus Holzwerkstoff gebildeten Plattenabschnitts,
- Figur 3 -: den an den Plattenabschnitt gemäß Figur 2 stirnseitig angesetzten benachbarten Plattenabschnitt,
- Figur 4 -: die Zuordnung der Plattenabschnitte gemäß Figuren 2 und 3 innerhalb der Paneelwandplatte,
- Figur 5 -: die Zuordnung der Blechabschnitte gemäß Figur 1 ohne Darstellung des Holzwerkstoffkerns und ohne Klebstoff,
- Figur 6 -: eine Verbindungsspange, die an der Stoßfuge benachbarter Blechabschnitte bei der dargestellten Verbindungsausführung vorgesehen ist,
- Figur 7 -: eine schematische Darstellung einer Paneelwandplatte, aus der die Maßverhältnisse der Plattenabschnitte aus Holzwerkstoff zu den Maßverhältnissen der Paneelwandplatte und den Maßverhältnissen der Blechabschnitte ersichtlich sind,
- Figur 8 -: eine vergrößerte Schnittdarstellung an einer Stoßfuge benachbarter Blechabschnitte mit einer Pittsburg-Falz.

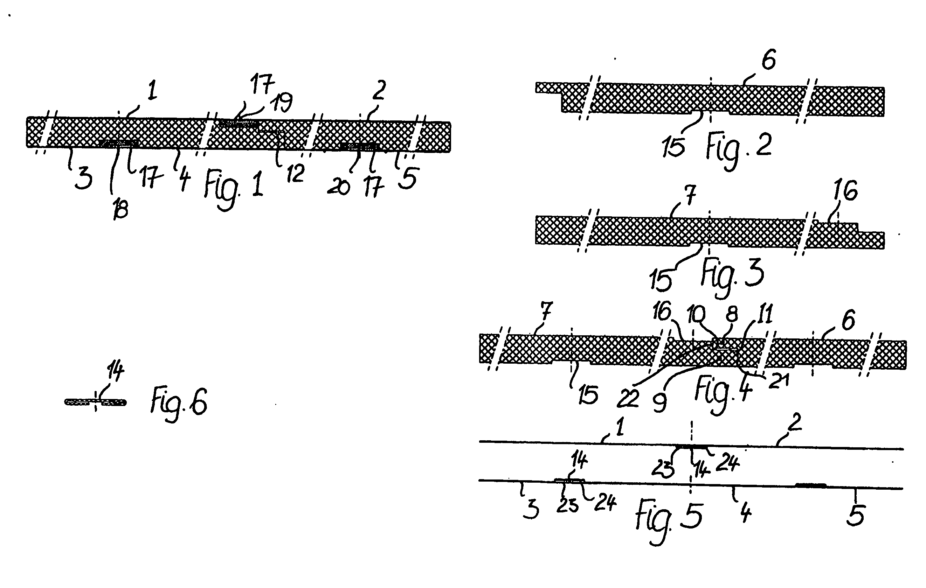

Die Paneelwandplatte besteht aus auf beiden Seiten eines Kerns aufgebrachten Aluminium-Kaschierblechen. In Figur 1 sind nur zwei der praktisch beliebig viel aneinandersetzbaren Blechabschnitte 1 und 2 auf der Oberseite dargestellt, auf der Unterseite gemäß Figur 1 sind drei unterschiedliche Blechabschnitte 3, 4 und 5 vorgesehen. Da die Länge der Paneelwandplatte beliebig groß wählbar sein soll, sind zur Vereinfachung der zeichnerischen Darstellungen die Paneelwände mit schräg verlaufenden, unterbrochenen Abschnitten gezeichnet. Der Kern der Paneelwandplatte wird durch Plattenabschnitte aus Holzwerkstoff gebildet. Eine bevorzugte Holzwerkstoffqualität sind Tischlerplatten oder sogenannte Stäbchenplatten. Es sind aber auch andere Holzwerkstoffplatten, beispielsweise Spanplatten oder MDF-Platten als Kernelemente geeignet.

In Figur 2 ist der gemäß Figur 1 rechte Plattenabschnitt ohne Kaschierung gezeigt. Figur 3 zeigt den gemäß Figur 1 linken Plattenabschnitt. Figur 4 zeigt die Plattenabschnitte 6 und 7, die in der Praxis die Darstellung mehrerer einzelner aneinanderliegender Plattenabschnitte sind, in dem Verbindungszustand. Die üblicherweise aus mehreren Plattenabschnitten bestehenden Plattenbereiche 6 und 7 sind an ihren Stirnkanten nicht stumpf gestoßen, sondern greifen formschlüssig über Vorsprünge und Rücksprünge ineinander ein. Dabei greift der Vorsprung 8 in eine Ausnehmung oder einen Rücksprung 10 ein, während der Vorsprung 9 in einen Rücksprung oder eine Ausnehmung 11 eingreift. Die beiden Vorsprünge 8 und 9 der unterschiedlichen Plattenbereiche 6 und 7 sind an ihren zueinander weisenden Flächen der Vorsprünge 8 und 9 mit Abstand zueinander angeordnet. Dieser Abstand ist im endgültigen Fertigungszustand mit Klebstoff 12 ausgefüllt.

Die an den Stoßfugen miteinander verbundenen Blechabschnitte weisen in gegensinnige Richtung umgebördelte Schenkel 23 und 24 auf. Diese umgebördelten Schenkel sind ihrerseits von den zueinander weisenden Schenkeln einer Verbindungsspange 14 übergriffen. Die umgefalzten Schenkel und die Verbindungsspange liegen in als Nuten 15 und 16 ausgebildeten Aussparungen der Oberfläche des Holzwerkstoffkerns. Die Nuten 15 und 16 sind so tief ausgebildet, daß sowohl die umgefalzten Schenkel 23 und 24 der Blechabschnitte 1, 2, 3, 4 und 5 als auch die Verbindungsspangen 14 in diesen Nuten liegen und daß der verbleibende Restraum mit Klebstoff 17 verfüllt ist. Die Anordnung ist so gewählt, daß die nach außen weisenden Sichtflächen der Blechabschnitte 1, 2, 3, 4 und 5 völlig bündig miteinander liegen.

Mit 18, 19 und 20 sind die Stoßfugen der Blechabschnitte bezeichnet. Die Stoßfugen der Plattenabschnitte sind mit 21 und 22 bezeichnet.

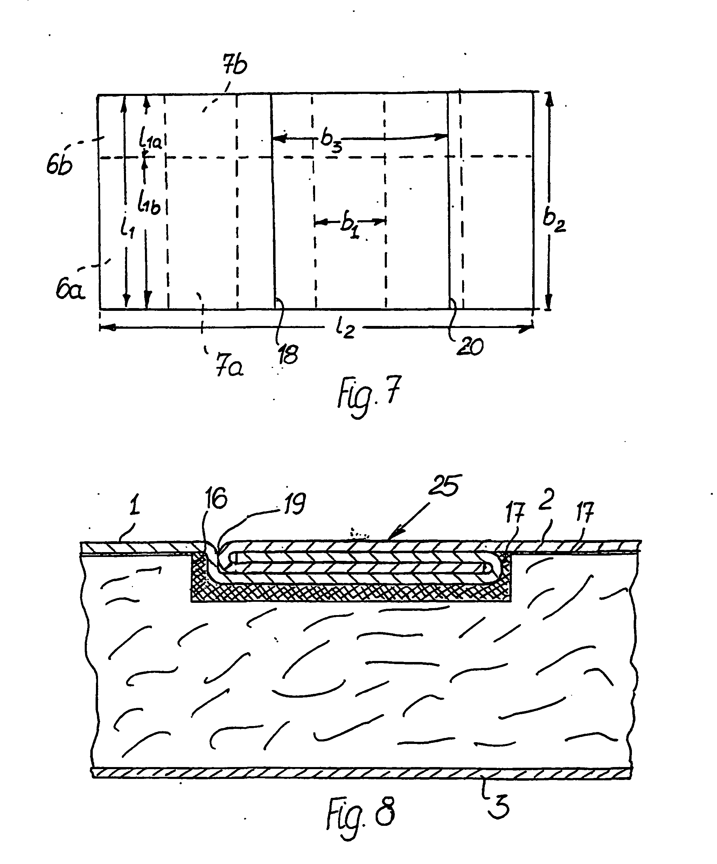

Figur 7 zeigt die Maßverhältnisse einer Paneelwandplatte:

Die Gesamtlänge der Paneelwandplatte ist mit l₂ bezeichnet, die Breite oder Höhe mit b₂.

Die Breite b₂ der Paneelwandplatte entspricht der Länge der Blechabschnitte. Die. Breite der Blechabschnitte ist mit b₃ bezeichnet. Der Einfachheit halber ist für b₃ das Maß zwischen benachbarten Stoßfugen 18 und 19 angegeben. Da an den Stoßfugen die miteinander im Eingriff stehenden Blechabschnitte umgebördelt sind, ist deren Breite größer als b₃.

Zwischen den Blechabschnitten befinden sich die Plattenabschnitte 6 und 7, die eine Gesamtlänge l₁ besitzen und eine Gesamtbreite von b₁. Auch bei dieser Breite handelt es sich um das Maß zwischen den Stoßfugen.

Die Gesamstlänge l₁ der Plattenabschnitte kann sich - wie dies im gezeigten Ausführungsbeispiel der Fall ist - aus der Länge mehrerer Plattenabschnitte zusammensetzen. So wird der gesamte Plattenabschnitt 6 aus zwei Stücken 6a und 6b gebildet und der gesamte Plattenabschnitt 7 aus zwei Stücken 7a und 7b. Die Breite der zu einer Gesamtlänge I₁ zusammengesetzten Stücke ist jeweils gleich.

In der Praxis beträgt die Breite geeigneter Holzwerkstoffplatten ca. 120cm und deren Länge ca. 244cm. Wenn also eine Paneelwandplatte mit einer Breite b₂ von mehr als 244cm gebildet werden soll, müssen die Plattenabschnitte aus Holzwerkstoff zusammengesetzt werden, wie dies in der Schemazeichnung dargestellt ist.

Figur 8 zeigt eine detailliertere Darstellung einer sogenannten Pittsburg-Falz im Schnitt. Bei einer solchen Falz fehlt die in der ersten Ausführungsform gemäß Figuren 1 bis 5 vorgesehene Verbindungsspange 14, die in Figur 6 dargestellt ist.

## Patentansprüche

1. Paneelwandplatte für Fahrzeuge mit einem Kern und auf beiden Seiten angeordneten Aluminium-Kaschierblechen, die jeweils aus aneinanderliegenden Blechabschnitten (1; 2; 3; 4; 5) bestehen, welche eine der Breite (b2) der Paneelwandplatte entsprechende Länge aufweisen und eine Breite (b3), die einem Bruchteil der Gesamtlänge (12) der Paneelwandplatte entspricht, wobei der Kern durch Plattenabschnitte (6; 7) aus Holzwerkstoff gebildet ist, deren Länge (11) der Breite (b2) der Paneelwandplatte und deren Breite (b1) einem Bruchteil der Gesamtlänge (12) der Paneelwandplatte entspricht, wobei die Plattenabschnitte (6; 7) mit ihren in gemeinsamen parallelen Ebenen liegenden Oberflächen mit den Innenflächen der Blechabschnitte (1; 2; 3; 4; 5) über Klebstoff (17) verbunden und an ihren Stirnkanten unter Bildung von Stoßfugen (21; 22) über formschlüssig ineinandergreifende Vorsprünge (8; 9) und Absätze (10; 11) miteinander verbunden sind,
**dadurch gekennzeichnet,**
**daß** die Plattenabschnitte (6; 7) zur Verbindung miteinander verklebt und die Blechabschnitte (1; 2; 3; 4; 5) unter Bildung von Stoßfugen (18; 19; 20) miteinander verbunden sind.

2. Paneelwandplatte nach Anspruch 1,
**dadurch gekennzeichnet,**
**daß** die Stoßfugen (18; 19; 20) der auf unterschiedlichen Seiten angeordneten Blechabschnitte (1; 2; 3; 4; 5) in Längsrichtung der Paneelwandplatte gegeneinander versetzt sind.

3. Paneelwandplatte nach Anspruch 1 oder 2,
**dadurch gekennzeichnet,**
**daß** die Stoßfugen (21, 22) der Plattenabschnitte (6; 7) gegenüber den Stoßfugen (18; 19; 20) der Blechabschnitte (1; 2; 3; 4; 5) in Längsrichtung der Paneelwandplatte gegeneinander versetzt sind.

4. Paneelwandplatte nach einem oder mehreren der Ansprüche 1 bis 3,
**dadurch gekennzeichnet,**
**daß** die Blechabschnitte (1; 2; 3; 4; 5) an den Stoßfugen (18; 19; 20) über eine Falz miteinander verbunden sind.

5. Paneelwandplatte nach Anspruch 4,
**dadurch gekennzeichnet,**
**daß** die Falz an ihren Stoßstellen in entgegengesetzte Richtung umgefalzte Schenkel (23; 24) aufweist.

6. Paneelwandplatte nach Ansprüchen 4 und 5,
**dadurch gekennzeichnet,**
**daß** die Falz als sogenannte Pittsburg-Falz ausgebildet ist.

7. Paneelwandplatte nach Ansprüchen 4 und 5,
**dadurch gekennzeichnet,**
**daß** die umgefalzten Schenkel (23; 24) der Blechabschnitte (1; 2; 3; 4; 5) von einer gemeinsamen Verbindungsspange (14) übergriffen werden.

8. Paneelwandplatte nach einem oder mehreren der Ansprüche 1 bis 7,
**dadurch gekennzeichnet,**
**daß** die umgefalzten Schenkel (23; 24) und die ggf. vorgesehehe Verbindungsspange (14) quer zu den Oberflächen der Paneelwandplatte miteinander verpreßt sind.

9. Paneelwandplatte nach einem oder mehreren der Ansprüche 1 bis 8,
**dadurch gekennzeichnet,**
**daß** zueinander benachbarte, auf jeweils einer Seite angeordnete Blechabschnitte (1; 2; 3; 4; 5) an der Stoßstelle (18; 19; 20) einander direkt übergreifende und flach gepreßte Verbindungsschenkel aufweisen.

10. Paneelwandplatte nach einem oder mehreren der Ansprüche 1 bis 9,
**dadurch gekennzeichnet,**
**daß** die in Richtung auf den Kern umgefalzten Schenkel (23; 24) oder flachgepreßten Verbindungsschenkel in entsprechenden Nuten (15; 16) des Kerns liegen, die mit Klebstoff aufgefüllt sind.

## Claims

1. Wall panel for vehicles with a core and aluminium laminate sheets arranged on both sides which consist of sheet sections (1; 2; 3; 4; 5) lying on each other whose length corresponds to the breadth (b2) of the wall panel assembly and whose breadth (b3) corresponds to a fraction of the overall length (12) of the wall panel, wherein the core is formed by panel sections (6; 7) made from wood material whose length (11) corresponds to the breadth (b2) of the wall panel and whose breadth (b1) corresponds to a fraction of the overall length (12) of the wall panel wherein the panel sections (6; 7) are connected with their surfaces lying in common parallel planes to the inner faces of the sheet sections (1; 2; 3; 4 5) by means of an adhesive (17) and are connected to each other at their edges with the formation of butt joints (21, 22) through projections (8 ; 9) and shoulders (10 ; 11) engaging in each other in a shape-locking way,
**characterised in that**
the panel sections (6; 7) are glued to each other for the purpose of connection and the sheet sections (1; 2; 3; 4; 5) are connected to each other with the formation of butt joints (18; 19; 20).

2. Wall panel according to claim 1,
**characterised in that**
the butt joints (18; 19; 20) of the sheet sections (1; 2; 3; 4; 5) arranged on different sides are offset relative each other in the longitudinal direction of the wall panel.

3. Wall panel according to claim 1 or 2,
**characterised in that**
the butt joints (21, 22) of the panel sections (6; 7) are offset relative to the butt joints (18; 19; 20) of the sheet sections (1; 2; 3; 4; 5) in the longitudinal direction of the wall panel.

4. Wall panel according to one or more of the claims 1 to 3,
**characterised in that**
the sheet sections (1; 2; 3; 4; 5) are connected to each other at the butt joints (18; 19; 20) by means of a seam.

5. Wall panel according to claim 4,
**characterised in that**
the seam at its junctions has flanges (23; 24) folded in the opposite direction.

6. Wall panel assembly according to claims 4 and 5,
**characterised in that**
the seam is formed as a so-called Pittsburg seam

7. Wall panel assembly according to claims 4 and 5,
**characterised in that**
the seamed flanges (23; 24) of the sheet sections (1; 2; 3; 4; 5) are engaged by a common connection fastening (14).

8. Wall panel assembly according to one or more of the claims 1 to 7,
**characterised in that**
the seamed flanges (23; 24) and the fastening (14) which may be provided are pressed together transverse to the surfaces of the wall panel.

9. Wall panel according to one or more of the claims 1 to 8,
**characterised in that**
the sheet sections (1; 2; 3; 4; 5) which are adjacent to each other and are each arranged on one side have flat pressed connecting flanges directly engaging over each other at the junction (18; 19; 20).

10. Wall panel assembly according to one or more of the claims 1 to 9,
**characterised in that**
the flanges (23; 24) folded in the direction of the core or flat pressed flange portions lie in corresponding grooves (15; 16) of the core which are filled with adhesive.

## Revendications

1. Panneau pour paroi de véhicules automobiles, avec une âme et, disposées sur les deux côtés, des tôles de revêtement en aluminium qui sont constituées chacune par des sections de tôle contiguës (1; 2; 3; 4; 5), lesquelles présentent une longueur qui correspond à la largeur (b2) du panneau pour paroi, et une largeur (b3) qui correspond à une fraction de la longueur totale (12) du panneau pour paroi, l'âme étant formée par des sections de panneau (6; 7) en matériau dérivé du bois, dont la longueur (11) correspond à la largeur (b2) du panneau pour paroi, et dont la largeur (b1) correspond à une fraction de la longueur totale (12) du panneau pour paroi, les sections de panneau (6; 7) étant reliées, avec leur surfaces situées sur des plans parallèles communs, aux surfaces intérieures des sections de tôle (1; 2; 3; 4; 5) au moyen d'une matière adhésive (17), et sont reliées ensemble, à leurs bords frontaux, par des saillies (8; 9) et des gradins (10; 11) s'engageant géométriquement les uns dans les autres, en formant des joints en about (21; 22),
**caractérisé en ce que**
les sections de panneau (6; 7) sont assemblés par collage et que les sections de tôle (1; 2; 3; 4; 5) sont reliées ensemble en formant des joints en about (18; 19; 20).

2. Panneau pour paroi selon la revendication 1,
**caractérisé en ce que**
les joints en about (18; 19; 20) des sections de tôle (1; 2; 3; 4; 5), disposées sur des côtés différents, sont décalés les uns par rapport aux autres, dans la direction longitudinale du panneau pour paroi.

3. Panneau pour paroi selon la revendication 1 ou 2,
**caractérisé en ce que**
les joints en about (21, 22) des sections de panneau (6; 7) sont décalés dans la direction longitudinale du panneau pour paroi par rapport aux joints en about (18; 19; 20) des sections de tôle (1; 2; 3; 4; 5).

4. Panneau pour paroi selon l'une ou plusieurs des revendications 1 à 3,
**caractérisé en ce que**
les sections de tôle (1; 2; 3; 4; 5) sont reliées ensemble, aux joints en about (18; 19; 20), au moyen d'un agrafage.

5. Panneau pour paroi selon la revendication 4,
**caractérisé en ce que**
le joint par agrafage présente, dans ses zones de contact, des ailes (23; 24) repliées en direction opposée.

6. Panneau pour paroi selon les revendications 4 et 5,
**caractérisé en ce que**
le joint par agrafage est un joint simple, replié, dit de Pittsburgh.

7. Panneau pour paroi selon les revendications 4 et 5,
**caractérisé en ce que**
les ailes repliées (23; 24) des sections de tôle (1; 2; 3; 4; 5) sont agrippées par une agrafe de liaison (14) commune.

8. Panneau pour paroi selon l'une ou plusieurs des revendications 1 à 7,
**caractérisé en ce que**
les ailes repliées (23; 24) et l'agrafe de liaison (14), éventuellement prévue, sont pressées ensemble, perpendiculairement par rapport aux surfaces du panneau pour paroi.

9. Panneau pour paroi selon l'une ou plusieurs des revendications 1 à 8,
**caractérisé en ce que**
les sections de tôle (1; 2; 3; 4; 5), voisines les unes des autres, respectivement disposées sur un côté, présentent, aux joints en about (18; 19; 20), des ailes de liaison qui se chevauchent directement les unes les autres et sont aplaties.

10. Panneau pour paroi selon l'une ou plusieurs des revendications 1 à 9,
**caractérisé en ce que**
les ailes (23; 24), repliées en direction de l'âme ou aplaties, sont disposées dans des rainures correspondantes (15; 16) de l'âme qui sont remplies de matière adhésive.
